# FASCICULE DE BREVET EUROPEEN

(11) **EP 1 442 926 B1**
(45) Date de publication et mention de la délivrance du brevet: **02.08.2006**
(21) Numéro de dépôt: 03290520.0
(22) Date de dépôt: 04.03.2003
(51) Int. Cl.: B60N 2/48

(54) **Housse pour siège de véhicule comportant une installation vidéo portable.**
Fahrzeugsitzüberzug mit einer tragbaren Videoanlage.
Vehicle seat cover with a portable video equipment.

(30) Priorité: 28.01.2003 FR 0300938
(43) Date de publication de la demande: 04.08.2004
(73) Titulaire: SEVIC SYSTEM AG, 56564 Neuwied (DE)
(72) Inventeur: Albert, Pascal, 8077 Bettange (LU); Jost, Gilbert, 4970 Bettange Sur Mess (LU)
(74) Mandataire: Dennemeyer, John James

(56) Documents cités:
- WO-A-01/96150
- DE-U- 29 518 369
- FR-A- 2 817 812
- FR-A- 2 825 330
- FR-A- 2 829 980
- US-A- 5 713 633
- US-A- 6 092 705

## Description

La présente invention concerne une installation vidéo complète, destinée à équiper la face arrière d'un siège, notamment un siège de véhicule, et constituée d'une structure support associée à un ensemble vidéo comprenant - une console électronique, tel qu'un lecteur DVD, SVCD, VCD, une console de jeux ou autre, et - un écran indépendant associé, tel qu'un écran à cristaux liquides, cathodique, à plasma ou autre.

Les appuis-têtes ou les parties supérieures des dossiers de véhicules automobiles, de trains, voire même d'avions, sont parfois équipés d'un écran vidéo permettant à la personne placée derrière le siège ainsi équipé, par exemple de visionner un film ou de visualiser des informations publicitaires.

Les coussins constituant le dossier ou l'appui-tête du siège sont généralement constitués d'un bloc de mousse synthétique recouvert d'une housse d'habillage en matière souple. Ils sont structurés et préparés de manière adaptée pour recevoir, in fine, l'écran vidéo ; en particulier, ils comportent un logement d'encastrement de l'écran et un socle de fixation intégré.

Cependant, ces particularités compliquent sensiblement la fabrication des coussins correspondants, notamment du fait de la nécessité de prévoir des moyens de fixation internes, et aussi à cause de la préparation particulière de la housse d'habillage nécessaire pour permettre la réception de l'ensemble vidéo et l'obtention d'une finition de qualité. Dans tous les cas, les coussins doivent être conçus ou modifiés spécifiquement pour permettre l'adaptation de l'ensemble vidéo.

La présente invention a pour but de proposer une installation vidéo de conception originale, comportant une structure support assurant une fixation rapide et esthétique sur les coussins constituant le siège. L'installation vidéo conforme à l'invention assure en outre un encombrement minimal, par rapport aux installations vidéo rapportées connues à ce jour.

L'installation vidéo conforme à l'invention comprend une structure support en forme de housse pour siège équipée, sur sa partie destinée à recouvrir la face arrière dudit siège, d'au moins un moyen de réception de la console électronique de ladite installation vidéo.
Par « moyen de réception », on entend notamment toute structure adaptée permettant une solidarisation entre la console électronique et la structure support en forme de housse. Par exemple, ce moyen de réception peut être une poche aménagée sur la face externe du dossier et adaptée pour contenir la console électronique ; le moyen de réception peut aussi consister en une structure rigide formant un logement de réception de la console électronique, le verrouillage entre la console et son logement adapté étant réalisé par le biais d'organes complémentaires adaptés.

Selon une première alternative de réalisation, l'installation vidéo comprend une structure support réceptionnant l'écran avec sa face frontale visible, indépendante de la structure support réceptionnant la console électronique.
Selon cette alternative, l'installation vidéo comprend d'une part, une structure support en forme de housse pour appui-tête équipée d'un moyen de réception d'écran aménagé sur sa partie destinée à recouvrir la face arrière dudit appui-tête, et d'autre part, une structure support en forme de housse pour dossier équipée d'un moyen de réception de la console aménagé sur sa partie destinée à recouvrir la face arrière dudit dossier.

Selon une seconde alternative, l'installation vidéo comprend une structure support en forme de housse comportant, sur sa partie destinée à recouvrir la face arrière du siège, un second moyen permettant la réception de l'écran avec sa face frontale visible.

Selon une première forme de réalisation de cette alternative, la structure support consiste en une housse destinée à recouvrir la partie dossier dudit siège. De préférence, le moyen de réception de l'écran est dans une position supérieure par rapport au moyen de réception de la console électronique.

Selon une seconde forme de réalisation de cette alternative, la structure support consiste en une housse monobloc destinée à recouvrir à la fois la partie appui-tête et la partie dossier du siège. De préférence, le moyen de réception de l'écran est aménagé sur la partie de ladite housse destinée à recouvrir la face arrière de l'appui-tête, et le moyen de réception de ladite console électronique est aménagé sur la partie de ladite housse destinée à recouvrir la partie dossier du siège.

Selon encore une alternative conforme à l'invention, la structure support consiste en une housse de dossier et/ou d'appui-tête équipée d'un moyen de réception pour une console électronique et un écran attenant, lequel moyen délimite un espace de réception unique.

Toujours selon l'invention, l'installation vidéo comprend une structure support en forme de housse équipée d'au moins un moyen de réception d'un écran et/ou d'une console électronique solidarisé à ladite housse par des moyens de fixation amovible.

Toujours selon l'invention, l'installation vidéo comprend au moins - une prise de connexion d'alimentation à partir de laquelle s'étend un câblage interne destiné à assurer l'alimentation électrique de l'ensemble vidéo, et - un système de câblage interne pour la liaison audio-vidéo entre ladite console et ledit écran.

Encore selon l'invention, l'installation vidéo comprend des moyens permettant une fixation amovible du ou des dispositifs électroniques de l'ensemble vidéo au sein de leur moyen de réception.

Toujours selon l'invention, l'installation vidéo intègre au moins un dispositif récepteur connecté à la console électronique, permettant son pilotage par un dispositif de type émetteur adapté.

Toujours selon l'invention, l'installation vidéo intègre au moins un dispositif de type émetteur audio et/ou vidéo, permettant l'utilisation d'un dispositif récepteur adapté, par exemple de type casque audio sans fil.

L'installation vidéo conforme à l'invention comprend encore avantageusement une structure support munie de moyens permettant la fixation d'éléments accessoires de l'ensemble vidéo, tels qu'une télécommande, un casque audio ou autre.

Toujours selon l'invention, l'installation vidéo comprend une structure support munie - d'une prise complémentaire de connexion d'alimentation, ainsi que - d'au moins une prise de connexion audio-vidéo, lesquelles prises sont reliées au système de câblage interne pour l'alimentation externe d'un écran et/ou d'une console électronique annexe.

L'invention a également pour objet une structure support en forme de housse de revêtement pour siège telle que décrite ci-dessus.

Mais l'invention sera encore illustrée, sans être aucunement limitée, par la description suivante de différents modes de réalisation, donnés uniquement à titre d'exemples et représentés sur les dessins annexés dans lesquels :
- la figure 1 est une vue schématique de la face arrière d'un siège de véhicule, équipé d'une installation vidéo conforme à l'invention, constituée ici d'une housse de revêtement du dossier réceptionnant la console électronique et d'une housse de revêtement de l'appui-tête réceptionnant l'écran ;
- la figure 2 est une vue en coupe selon 2-2 du siège équipé de l'installation vidéo représentée sur la figure 1 ;
- la figure 3 est une représentation schématique de la face arrière d'un siège équipé d'une installation vidéo conforme à l'invention, la structure support en forme de housse étant de type monobloc ;
- la figure 4 est une représentation schématique de la face arrière d'un siège équipé d'une installation vidéo conforme à l'invention, dont la structure support en forme de housse de dossier est munie d'un unique réceptacle de réception de l'ensemble vidéo.

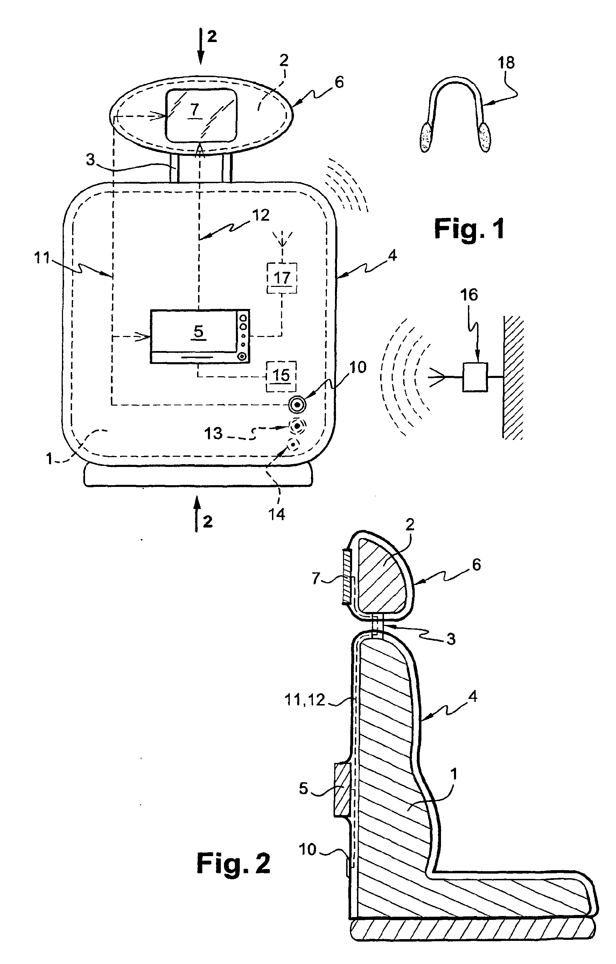

La figure 1 représente un siège équipé d'une installation vidéo conforme à l'invention. Ce siège est constitué d'un dossier 1 prolongé par un appui-tête 2 indépendant, et fixé par des tiges d'ancrage 3.

Ce siège est équipé d'une installation vidéo constituée d'une part, d'une structure support 4 en forme de housse de dossier dont la partie recouvrant la face arrière dudit dossier comporte une console électronique 5 avec sa face frontale visible, et d'autre part, d'une structure support 6 en forme de housse pour appui-tête 2 dont la partie recouvrant la face arrière dudit appui-tête 2 comporte un écran 7 avec sa face frontale visible. La structure support 4 réceptionnant la console électronique 5 est donc indépendante de la structure support 6 réceptionnant l'écran 7.
L'ensemble vidéo peut par exemple consister en un ensemble DVD constitué d'un lecteur DVD et de son écran associé, permettant le visionnage de disques DVD.

Les structures supports 4, 6 sont conformées pour venir épouser au mieux les contours du dossier 1 et de l'appui-tête 2. Elles comportent chacune une ouverture qui permet leur positionnement sur la partie du siège pour lesquelles elles sont destinées.
De préférence, la structure de housse 6 destinée à recouvrir l'appui-tête 2 est munie d'organes de fermeture amovibles genre élastiques ou bandes auto-agrippantes ; la structure de housse 4 destinée à recouvrir le dossier 1 est associée à des organes de solidarisation de type crochets, sangles ou autres, venant se fixer sur le châssis du siège.

Les dispositifs électroniques 5, 7 de l'ensemble vidéo sont fixés sur leur structure support 4, 6 par tout moyen approprié.
A titre seulement indicatif, on peut aménager une ouverture ou découpe, dans la partie des housses 4, 6 destinée à recouvrir la face arrière du dossier 1 et de l'appui-tête 2, et dont la forme et les dimensions sont adaptées à la console électronique 5 et à l'écran 7 ; on fixe ensuite les dispositifs électroniques 5, 7 par prise en sandwich de la bordure périphérique desdites ouvertures, entre le dispositif électronique et une structure rigide rapportée complémentaire, positionnée du côté de la face interne de la housse 4, 6. Cette fixation peut être de type amovible par l'emploi d'organes complémentaires aménagés entre lesdits dispositifs électroniques 5, 7 et les structures rigides complémentaires.

Les connexions électriques permettant le fonctionnement de l'ensemble vidéo sont représentées schématiquement en traits pointillés sur la figure 1.

Le ou les éventuels câblages qui assurent l'alimentation de la console 5 et de l'écran 7 sont préférentiellement aménagés sur la face interne des structures supports 4, 6. Ils peuvent circuler entre le dossier 1 et l'appui-tête 2 en longeant l'une des tiges d'ancrage 3 de l'appui-tête 2.

On remarque sur la figure 1 la présence d'une prise de connexion d'alimentation 10, disposée sur la structure support 4 recouvrant le dossier 1. Bien entendu, cette prise 10 peut être positionnée en toute position sur l'installation vidéo, par exemple sur la console électronique 5.
Cette prise de connexion d'alimentation 10 permet le branchement de l'installation sur le secteur ou sur la prise allume-cigares d'un véhicule automobile, au moyen d'un cordon de connexion adapté. Les câbles intégrés 11 qui assurent l'alimentation de la console 5 et de l'écran 7 s'étendent depuis cette prise de connexion 10.

D'autre part, la console 5 et l'écran 7 sont reliés par un câblage 12 destiné à assurer la liaison audio-vidéo entre ces deux dispositifs.

L'installation vidéo peut également intégrer, comme représenté en pointillés sur la figure 1, - une prise complémentaire de connexion d'alimentation 13, et - une prise de connexion audio-vidéo 14 ; ces prises 13, 14 permettent l'alimentation et le pilotage par l'extérieur de l'écran 7 équipant soit l'appui-tête 2 prolongeant le dossier 1, figure 1, soit l'appui-tête d'un siège adjacent (non illustré).

Cette installation intègre en outre un dispositif de type récepteur 15 connecté à la console électronique 5 ; ce récepteur 15 permet notamment le pilotage de la console 5 au moyen d'un dispositif émetteur externe 16 du type borne émettrice d'information, par exemple.

Cette installation vidéo intègre de plus un dispositif émetteur audio-vidéo 17, connecté à l'ensemble vidéo ; cet émetteur 17 permet l'utilisation d'un dispositif de type récepteur audio-vidéo sans fil 18, par exemple du type casque audio.

Pour faciliter le rangement de l'ensemble de ces accessoires (télécommande et casque audio), des moyens d'accrochage et de rangement peuvent être aménagés sur la housse de réception de l'ensemble vidéo.

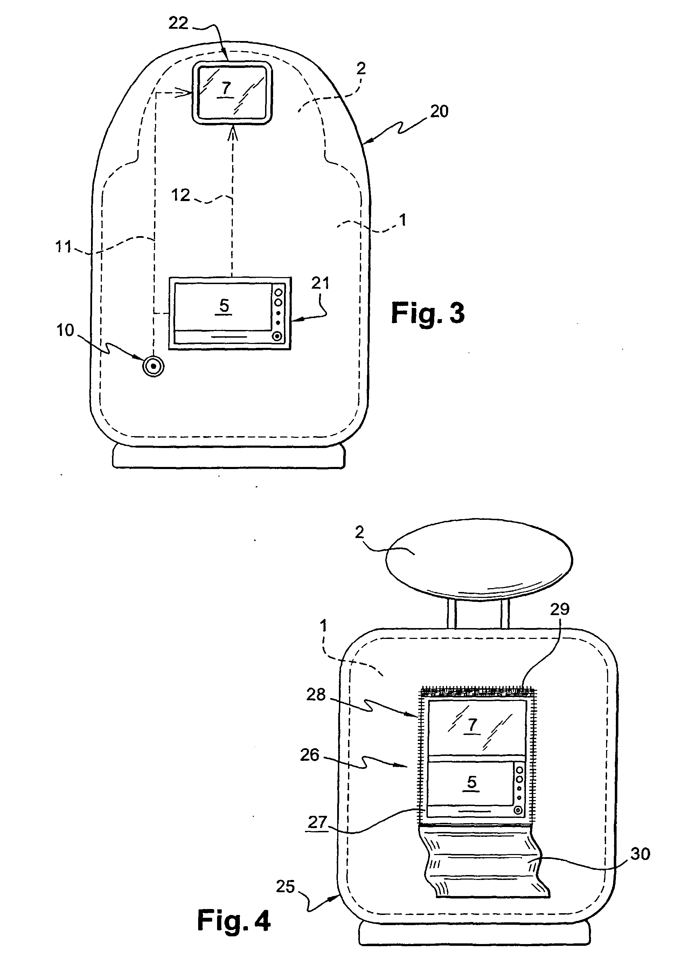

Selon une forme alternative de réalisation de l'invention représentée figure 3, l'installation vidéo comprend une structure support en forme de housse monobloc recouvrant à la fois le dossier 1 et l'appui-tête 2 du siège.

Cette housse monobloc 20 est munie de deux réceptacles 21, 22. L'un desdits réceptacles 21 est aménagé sur la partie de ladite housse 20 recouvrant la face arrière du dossier 1 de sorte à réceptionner la console électronique 5 avec sa face frontale visible ; l'autre desdits réceptacles 22 est aménagé sur la partie de la housse 20 recouvrant la face arrière de l'appui-tête 2 de façon à réceptionner l'écran 7.

L'ensemble des câblages 11, 12, adaptés pour le fonctionnement de l'installation sont aménagés de préférence sur la face interne de la structure support 20.

Bien entendu, cette installation vidéo peut également intégrer tout accessoire complémentaire, tel que dispositif émetteur et/ou récepteur, pour améliorer notamment son utilisation et son ergonomie.

La figure 4 représente encore une forme alternative d'installation vidéo conforme à l'invention, comprenant une structure support 25 en forme de housse pour dossier 1 équipée, sur sa partie destinée à recouvrir la face arrière dudit dossier 1, d'un réceptacle intermédiaire 26 adapté pour contenir l'ensemble vidéo 5, 7. L'ensemble vidéo 5, 7 se présente ici sous la forme d'un ensemble monobloc, la console 5 et l'écran 7 étant reliés par un système de type charnière.

Ce réceptacle intermédiaire 26 est délimité par un fond 27 et par une ceinture de parois latérales 28. Il est solidarisé sur la structure support 25 par tout moyen approprié. Par exemple, le fond 27 peut être cousu ou collé sur ladite structure support 25 ; il peut aussi être solidarisé sur la structure support 25 de manière amovible, au moyen de bandes auto-agrippantes ou d'une fermeture à glissière par exemple.
Ce réceptacle 26 est réalisé en matériau souple, par exemple en tissu ou en matière synthétique. Les parois latérales 28 peuvent éventuellement être renforcées par la mise en place d'une ceinture rigide contre la face interne desdites parois.

L'ensemble vidéo 5, 7 est solidarisé au sein du réceptacle intermédiaire 26 par tout moyen adapté. A titre seulement indicatif, le fond 27 du réceptacle 26 est muni d'une bande auto-agrippante destinée à coopérer avec une bande complémentaire aménagée sur la face arrière de la console 5 ; le réceptacle 26 est également muni d'une bande élastique 29 destinée à ceinturer l'extrémité supérieure de l'écran 7. Il est alors possible d'intégrer ou de retirer rapidement l'ensemble vidéo 5, 7 du réceptacle intermédiaire 26.

En outre, ce réceptacle 26 est muni d'un volet 30, permettant la fermeture de sa face frontale. Ce volet 30 est muni d'un système permettant une fermeture amovible du réceptacle 26, par exemple du type fermeture à glissière.

Ces différentes installations vidéo, comportant des structures supports en forme de housse pour dossier, appui-tête ou housse monobloc, peuvent être montées sur les sièges de réception d'une manière tout-à-fait classique.
L'ensemble de ces installations permet un encombrement minimal lors de leur utilisation, et offre une possibilité de s'adapter sur une large gamme de sièges de véhicules.

## Revendications

1. Installation vidéo, destinée à équiper un siège, comportant un ensemble vidéo comprenant une console électronique (5) genre lecteur vidéo ou console de jeu, et un écran indépendant associé (7), laquelle installation comprend en outre - un moyen de connexion (11) destiné à assurer l'alimentation électrique dudit ensemble vidéo, et - un moyen d'interconnexion (12) pour la liaison audio-vidéo entre ladite console (5) et ledit écran (7),
**caractérisée en ce qu'**elle comprend une structure support (4, 20, 25) en forme de housse de revêtement pour siège, équipée sur sa partie recouvrant la face arrière dudit siège d'au moins un moyen de réception de ladite console électronique (5).

2. Installation vidéo selon la revendication 1, **caractérisée en ce qu'**elle comprend une structure support (6) réceptionnant l'écran (7) avec sa face frontale visible, laquelle structure support (6) est indépendante de la structure support (4) réceptionnant la console électronique (5).

3. Installation vidéo selon la revendication 2, **caractérisée en ce qu'**elle comprend d'une part, une structure support (6) pour l'écran (7) consistant en une housse pour un appui-tête (2) munie d'un moyen de réception dudit écran (7) aménagé sur sa partie destinée à recouvrir la face arrière dudit appui-tête, et d'autre part, une structure support (4) pour la console électronique (5) consistant en une housse pour dossier (1) équipée d'un moyen de réception de ladite console (5), aménagé sur sa partie destinée à recouvrir la face arrière dudit dossier.

4. Installation vidéo selon la revendication 1, **caractérisée en ce qu'**elle comprend une structure support (20) en forme de housse munie sur sa partie destinée à recouvrir la face arrière du siège d'un second moyen (22) permettant la réception de l'écran (7) avec sa face frontale visible.

5. Installation vidéo selon la revendication 4, **caractérisée en ce que** la structure support consiste en une housse de revêtement destinée à recouvrir la partie dossier dudit siège, laquelle housse est munie du moyen de réception de l'écran en position supérieure par rapport au moyen de réception de la console électronique.

6. Installation vidéo selon la revendication 4, **caractérisée en ce que** la structure support (20) consiste en une housse monobloc destinée à recouvrir à la fois la partie appui-tête (2) et la partie dossier (1) du siège, le réceptacle de réception (22) de l'écran (7) étant aménagé sur la partie de ladite housse (20) destinée à recouvrir la face arrière de l'appui-tête (2), et le réceptacle (21) de réception de ladite console électronique (5) étant aménagé sur la partie de ladite housse (20) destinée à recouvrir la partie dossier (1).

7. Installation vidéo selon la revendication 1, **caractérisée en ce qu'**elle comprend une structure support (25) en forme de housse de dossier et/ou d'appui-tête équipée d'un réceptacle (26) de réception pour une console électronique (5) et un écran (7) attenant, lequel réceptacle (26) délimite un espace de réception unique.

8. Installation vidéo selon l'une quelconque des revendications 1 à 7, **caractérisée en ce qu'**elle comprend une structure support en forme de housse de revêtement pour siège équipée d'au moins un moyen de réception solidarisé à ladite housse par des moyens assurant une fixation amovible.

9. Installation vidéo selon l'une quelconque des revendications 1 à 8, **caractérisée en ce qu'**elle comprend au moins - une prise de connexion d'alimentation (10) à partir de laquelle s'étend un câblage interne (11) destiné à assurer l'alimentation électrique de l'ensemble vidéo (5, 7), et - un système de câblage interne (12) pour la liaison audio-vidéo entre ladite console (5) et ledit écran (7).

10. Installation vidéo selon l'une quelconque des revendications 1 à 9, **caractérisée en ce qu'**elle comprend des moyens de réception permettant une fixation amovible du ou des dispositifs électroniques de l'ensemble vidéo à leur structure support correspondante.

11. Installation vidéo selon l'une quelconque des revendications 1 à 10, **caractérisée en ce qu'**elle intègre au moins un dispositif récepteur (15) connecté à la console électronique (5), permettant son pilotage par un dispositif de type émetteur (16) adapté.

12. Installation vidéo selon l'une quelconque des revendications 1 à 11, **caractérisée en ce qu'**elle intègre au moins un dispositif de type émetteur audio et/ou vidéo (17), permettant l'utilisation d'un dispositif récepteur (18) adapté, par exemple de type casque audio sans fil.

13. Installation vidéo selon l'une quelconque des revendications 1 à 12, **caractérisée en ce qu'**elle comprend une structure support munie de moyens permettant la fixation d'éléments accessoires de l'ensemble vidéo, tels qu'une télécommande, un casque audio ou autre.

14. Installation vidéo selon l'une quelconque des revendications 1 à 13, **caractérisée en ce que** la structure support est munie - d'une prise complémentaire de connexion d'alimentation (13), ainsi que - d'au moins une prise de connexion audio-vidéo (14), lesquelles prises (13, 14) sont reliées au système de câblage interne (11, 12) pour l'alimentation externe d'un écran et/ou d'une console électronique indépendant.

15. Structure support en forme de housse de revêtement pour siège, destinée à recevoir au moins un dispositif électronique (5, 7) d'un ensemble vidéo, selon l'une quelconque des revendications 1 à 14.

## Claims

1. A video unit, intended for a seat, with a video set comprising an electronic console (5), such as a video reader or a play station, and an associated independent screen (7), which unit comprises moreover - a connection means (11) intended for the electric supply of said video unit, and - an interconnection means (12) for the audio-video link between said console (6) and said screen (7),
**characterised in that** it comprises a supporting structure (4, 20, 25) in the form of a seat protective cover, fitted on its portion intended to cover the rear face of said seat, with at least one means for receiving said electronic console (5).

2. A video unit according to claim 1, **characterised in that** it comprises a supporting structure (6) accommodating the screen (7) with its front face visible, which supporting structure (6) is independent of the supporting structure (4) accommodating the electronic console (5).

3. A video unit according to claim 2, **characterised in that** it comprises on the one hand, a supporting structure (6) for the screen (7) consisting of a protective cover for a head-rest (2) fitted with a means for receiving said screen (7) arranged on its section intended to cover the rear face of said head-rest, and, on the other hand, a supporting structure (4) for the electronic console (5) consisting of a protective cover for seat backs (1), fitted with a means for receiving said console (5), arranged on its section intended to cover the rear face of said seat back.

4. A video unit according to claim 1, **characterised in that** it comprises a supporting structure (20) in the form of a protective cover comprising, on its section intended to cover the rear face of the seat, a second means (22) enabling to receive the screen (7) with its front face visible.

5. A video unit according to claim 4, **characterised in that** the supporting structure consists of a protective cover intended for the back section of said seat, which protective cover is fitted with the means for receiving the screen in a higher position relative to the electronic console receiving means.

6. A video unit according to claim 4, **characterised in that** the supporting structure (20) consists of a single block protective cover intended simultaneously for the head-rest section (2) and the back section (1) of the seat, whereas the receiving receptacle (22) of the screen (7) is arranged on the section of said cover (20) intended for the rear face of the head-rest (2), and the receiving receptacle (21) for said electronic console (5) is arranged on the section of said cover (20) intended for the back section (1) of the seat.

7. A video unit according to claim 1, **characterised in that** it comprises a supporting structure (25) in the form of a seat back cover and/or a head-rest cover fitted with a receiving receptacle (26) for an electronic console (5) and an adjoining screen (7), which receiving receptacle (26) delineates a single receiving space.

8. A video unit according to any of the claims 1 to 7, **characterised in that** it comprises a supporting structure in the form a of seat protective cover fitted with at least one receiving means interconnected with said protective cover by removable fastening means.

9. A video unit according to any of the claims 1 to 8, **characterised in that** it comprises at least - one power supply socket (10) from which extends an internal power supply cabling (11) intended for the electric supply of the video unit (5, 7), and - an internal cabling system (12) for the audio-video link between said console (5) and said screen (7).

10. A video unit according to any of the claims 1 to 9, **characterised in that** it comprises receiving means enabling removable fastening of the electronic device(s) of the video unit within their corresponding supporting structure.

11. A video unit according to any of the claims 1 to 10, **characterised in that** it integrates at least one receiving device (15) connected to the electronic console, enabling its operation by an adapted transmitter-type device.

12. A video unit according to any of the claims 1 to 11, **characterised in that** it integrates at least one transmitter and/or video-type device (17), enabling to use an adapted receiving device (18), such as a cordless headset.

13. A video unit according to any of the claims 1 to 12, **characterised in that** it comprises a supporting structure fitted with means enabling to fasten accessory elements of the video unit, such a remote control, a headset or other.

14. A video unit according to any of the claims 1 to 13, **characterised in that** it comprises a supporting structure fitted - with an additional power supply connection socket (13), as well as - at least one audio-video connection socket (14), which sockets (13, 14) are connected to the internal cabling system (11, 12) for external power supply of a screen and/or an independent electronic console.

15. A supporting structure in the form of a protective cover for a seat back, intended to accommodate at least one electronic device (5, 7) of a video set, according to any of the claims 1 to 14.

## Patentansprüche

1. Videoanlage, die dazu bestimmt ist, in einen Sitz integriert zu werden, umfassend eine Videoeinheit, umfassend eine Elektronikkonsole (5) von der Art Videoleser oder Spielkonsole und einen zugehörigen unabhängigen Bildschirm (7), wobei die Anlage ferner -ein Anschlussmittel (11), das dazu bestimmt ist, die elektrische Versorgung der Videoeinheit zu gewährleisten, und -ein Mittel zum Zusammenschluss (12) für die Audio-Video-Verbindung zwischen der Konsole (5) und dem Bildschirm (7) umfasst,
**dadurch gekennzeichnet, dass** sie eine Stützstruktur (4, 20, 25) in Form eines Sitzüberzugs umfasst, der auf seinem die Rückseite des Sitzes bedeckenden Teil mit mindestens einem Mittel zur Aufnahme der Elektronikkonsole (5) versehen ist.

2. Videoanlage nach Anspruch 1, **dadurch gekennzeichnet, dass** sie eine Stützstruktur (6) umfasst, die den Bildschirm (7) mit seiner sichtbaren Frontseite aufnimmt, wobei die Stützstruktur (6) von der Stützstruktur (4), die die Elektronikkonsole (5) aufnimmt, unabhängig ist.

3. Videoanlage nach Anspruch 2, **dadurch gekennzeichnet, dass** sie einerseits eine Stützstruktur (6) für den Bildschirm (7), die in einem Überzug für eine Kopfstütze (2) besteht, der mit einem Aufnahmemittel für den Bildschirm (7) versehen ist, das auf dem Teil vorgesehen ist, der dazu bestimmt ist, die Rückseite der Kopfstütze zu bedecken, und andererseits eine Stützstruktur (4) für die Elektronikkonsole (5) umfasst, die in einem Überzug für eine Rückenlehne (1) besteht, der mit einem Aufnahmemittel für die Konsole (5) versehen ist, das auf dem Teil vorgesehen ist, der dazu bestimmt ist, die Rückseite der Rückenlehne zu bedecken.

4. Videoanlage nach Anspruch 1, **dadurch gekennzeichnet, dass** sie eine Stützstruktur (20) in Form eines Überzugs umfasst, der auf dem Teil, der dazu bestimmt ist, die Rückseite des Sitzes zu bedecken, mit einem zweiten Mittel (22) versehen ist, das die Aufnahme des Bildschirms (7) mit seiner sichtbaren Frontfläche ermöglicht.

5. Videoanlage nach Anspruch 4, **dadurch gekennzeichnet, dass** die Stützstruktur in einem Überzug besteht, der dazu bestimmt ist, die Rückenlehne des Sitzes zu bedecken, wobei der Überzug mit dem Mittel zur Aufnahme des Bildschirms in der höheren Position in Bezug auf das Mittel zur Aufnahme der Elektronikkonsole versehen ist.

6. Videoanlage nach Anspruch 4, **dadurch gekennzeichnet, dass** die Stützstruktur (20) in einem einstückigen Überzug besteht, der dazu bestimmt ist, sowohl die Kopfstütze (2) als auch die Rückenlehne (1) des Sitzes zu bedecken, wobei das Behältnis für die Aufnahme (22) des Bildschirms (7) auf dem Teil des Überzugs (20) vorgesehen ist, der dazu bestimmt ist, die Rückseite der Kopfstütze (2) zu bedecken, und wobei das Behältnis (21) für die Aufnahme der Elektronikkonsole (5) auf dem Teil des Überzugs (20) vorgesehen ist, der dazu bestimmt ist, die Rückenlehne (1) zu bedecken.

7. Videoanlage nach Anspruch 1, **dadurch gekennzeichnet, dass** sie eine Stützstruktur (25) in Form eines Überzugs für eine Rückenlehne und/oder Kopfstütze umfasst, die mit einem Behältnis (26) für die Aufnahme einer Elektronikkonsole (5) und eines aufgesetzten Bildschirms (7) versehen ist, wobei das Behältnis (26) einen einzigen Aufnahmeraum begrenzt.

8. Videoanlage nach einem der Ansprüche 1 bis 7, **dadurch gekennzeichnet, dass** sie eine Stützstruktur in Form eines Überzugs für einen Sitz umfasst, die mit mindestens einem Aufnahmemittel versehen ist, das mit dem Überzug durch Mittel verbunden ist, die eine abnehmbare Befestigung sicher stellen.

9. Videoanlage nach einem der Ansprüche 1 bis 8, **dadurch gekennzeichnet, dass** sie mindestens -einen Versorgungsanschluss (10), von dem sich ein inneres Kabel (11) erstreckt, das dazu bestimmt ist, die elektrische Versorgung der Videoeinheit (5, 7) sicher zu stellen, und -ein inneres Verkabelungssystem (12) für die Audio-Video-Verbindung zwischen der Konsole (5) und dem Bildschirm (7) umfasst.

10. Videoanlage nach einem der Ansprüche 1 bis 9, **dadurch gekennzeichnet, dass** sie Aufnahmemittel umfasst, die eine abnehmbare Befestigung der Elektronikvorrichtung(en) der Videoeinheit an ihrer entsprechenden Stützstruktur ermöglichen.

11. Videoanlage nach einem der Ansprüche 1 bis 10, **dadurch gekennzeichnet, dass** sie mindestens eine Aufnahmevorrichtung (15) umfasst, die an die Elektronikkonsole (5) angeschlossen ist, die ihre Steuerung durch eine geeignete Vorrichtung vom Typ Sender (16) ermöglicht.

12. Videoanlage nach einem der Ansprüche 1 bis 11, **dadurch gekennzeichnet, dass** sie mindestens eine Vorrichtung vom Typ Audio- und/oder Videoempfänger (17) umfasst, der die Verwendung geeigneten Empfangsvorrichtung (18), beispielsweise vom Typ drahtloser Kopfhörer, ermöglicht.

13. Videoanlage nach einem der Ansprüche 1 bis 12, **dadurch gekennzeichnet, dass** sie eine Stützstruktur umfasst, die mit Mitteln versehen ist, die die Befestigung von Zubehör der Videoeinheit, wie beispielsweise einer Fernsteuerung, eines Kopfhörers oder dergleichen, ermöglichen.

14. Videoanlage nach einem der Ansprüche 1 bis 13, **dadurch gekennzeichnet, dass** die Stützstruktur mit -einem ergänzenden Versorgungsanschluss (13) sowie mit -mindestens einem Audio-Video-Anschluss (14) versehen ist, wobei die Anschlüsse (13, 14) mit dem inneren Verkabelungssystem (11, 12) für die externe Versorgung eines Bildschirms und/oder einer unabhängigen Elektronikkonsole verbunden sind.

15. Stützstruktur in Form eines Sitzüberzugs, die dazu bestimmt ist, mindestens eine Elektronikeinrichtung (5, 7) einer Videoeinheit nach einem der Ansprüche 1 bis 14 aufzunehmen.
